(19)

Europäisches Patentamt

European Patent Office

Office européen des brevets

(11) **EP 3 009 457 B1**

(12) **EUROPEAN PATENT SPECIFICATION**

(45) Date of publication and mention of the grant of the patent:
**21.06.2017 Bulletin 2017/25**

(51) Int Cl.:
***C08F 2/00*** *(2006.01)*          ***C08J 5/18*** *(2006.01)*
***C08L 23/08*** *(2006.01)*

(21) Application number: **14188861.0**

(22) Date of filing: **14.10.2014**

(54) **Geomembrane applications based on polyethylene**

Geomembrananwendungen auf Basis von Polyethylen

Applications de géomembrane basées sur du polyéthylène

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.04.2016 Bulletin 2016/16**

(73) Proprietors:
- **Abu Dhabi Polymers Co. Ltd (Borouge) LLC.**
  **Abu Dhabi (AE)**
- **Borealis AG**
  **1220 Vienna (AT)**

(72) Inventors:
- **Galiatsatos, Vassilios**
  **Abu Dhabi (AE)**

- **Orn, Lars**
  **Abu Dhabi (AE)**
- **Dixit, Niraj**
  **Abu Dhabi (AE)**
- **Singh, Raghvendra**
  **Abu Dhabi (AE)**

(74) Representative: **Maiwald Patentanwalts GmbH**
**Elisenhof**
**Elisenstrasse 3**
**80335 München (DE)**

(56) References cited:
**EP-A1- 1 333 044      EP-A1- 2 067 799**
**US-A- 5 736 237**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention is directed to a new polyethylene comprising at least two different polyethylene fractions with different molecular weight and 1-butene content, said polyethylene is especially suitable for the production of geomembranes.

Geomembranes are very low permeability synthetic membrane liner or barrier to control fluid (or gas) migration. Geomembranes quite often comprise different (polymeric) layers. It has been envisaged that polyethylene is the material of choice for at least one of the layers. However the requirements for polyethylenes in geomebranes are quite demanding. For instance the Geosynthetic Research Institute requires that a polyethylene used in geomembranes must have a tensile strain at break of at least 700 %.

WO 2006/067180 describes geomembrane applications based on a bimodal polyethylene having a density in the range of 0.925 to 0.945 g/cm$^3$. However this application is silent as to how to improve the tensile break at strain. No information about the bimodal character of the polyethylenes is provided. Further the application does not deal with the improvement of the tensile elongation at break.

US 5,736,237 describes a geomembrane based on a bimodal ethylene copolymer. No information is provided with regard to the comonomer distribution in the final polymer, i.e. no information about the amounts of the comonomers in the individual fractions of the bimodal ethylene copolymer is provided. Further the low molecular fraction is defined by rather low density.

Thus it is the object of the present invention to provide a polyethylene with exceptional high tensile elongation at break values. Further the polymer should be easy processable.

The finding of the present invention is to provide a polyethylene which comprises at least two fractions which have different molecular weight, density and/or comonomer content.

Accordingly the present invention is directed to a polyethylene (PE-C) comprising at least

(a) a first polyethylene fraction (PE-F1); said fraction is an ethylene copolymer of ethylene and 1-butene,
(b) a second polyethylene fraction (PE-F2), said fraction is an ethylene copolymer of ethylene and 1-hexene,

wherein said polyethylene (PE-C) has

(c) a melt flow rate MFR$_{21}$ (190 °C; 21.6 kg) measured according to ISO 1133, in the range of 2.0 to 40 g/10min; and
(d) a density measured according to ISO 1 183 / 1 872-2 B in the range of 0.930 to 0.942 g/cm$^3$; and
(e) complies with the in-equation (Ib)

$$21.0 \leq \frac{MFR2(PEF1)}{MFR21(PEC)} \leq 35.0 \quad \text{(Ib)}$$

wherein MFR2(PF) is the melt flow rate MFR$_2$ (190 °C; 2.16 kg) measured according to ISO 1133 of the first polyethylene fraction (PE-F1): MFR21(PEC) is the melt flow rate MFR$_{21}$ (190 °C; 21.6 kg) measured according to ISO 1133 of the polyethylene (PE-C),

wherein further said first polyethylene fraction (PE-F1) has

(f) a melt flow rate MFR$_2$ (190 °C; 2.16 kg) measured according to ISO 1133, in the range of 250 to 450 g/10min; and
(g) a density measured according to ISO 1 183 / 1 872-2 B of more than 0.950 g/cm$^3$.

Preferably the weight ratio between the first polyethylene fraction (PE-F1) and second polyethylene fraction (PE-F2) of the polyethylene (PE-C) is equal or below 1.0, preferably in the range of 1/8 to 8/9.

Additionally or alternatively to the previous paragraph, the amount of the first polyethylene fraction (PE-F1) is in the range of 30 to equal or below 45 wt.-% and the amount of the second polyethylene fraction (PE-F2) is in the range of to equal or above 55 to 70 wt.-%, based on the total amount of the polyethylene (PE-C).

It is in particular preferred that the polyethylene (PE-C) according to this invention has

(a) a molecular weight distribution (Mw/Mn) in the range of 15 to 45.
and/or
(b) a shear thinning index SHI(2.7/210), being the ratio of the viscosity at a complex modulus of 2.7 kPa and of 210 kPa of at least 15.0;
and/or

(c) a polydispersity index (PDI) of at least 1.5.

Further it is preferred that the polyethylene (PE-C) according to this invention has flow rate ratio (FFR; $MFR_{21}/MFR_5$) of at least 15 and/or a density in the range of 0.934 to 0.943 $g/cm^3$.

Still further preferred, the second polyethylene fraction (PE-F2) has a density measured according to ISO 1 183 / 1 872-2 B in the range of 0.880 to 0.935 $g/cm^3$.

In a specific embodiment of this invention the polyethylene (PE-C) complies with the in-equation (II)

$$\frac{MFR2(PEF1)}{MFR5(PEC)} \geq 380$$

wherein

MFR2(PF1) is the melt flow rate $MFR_2$ (190 °C; 2.16 kg) measured according to ISO 1133 of the first polyethylene fraction (PE-F1):

MFR5(PEC) is the melt flow rate $MFR_5$ (190 °C; 5 kg) measured according to ISO 1133 of the polyethylene (PE-C);

and/or
the in-equation (III)

$$\frac{MFR2(PEF1)}{MFR2(PEC)} \geq 2000$$

wherein

MFR2(PF1) is the melt flow rate $MFR_2$ (190 °C; 2.16 kg) measured according to ISO 1133 of the first polyethylene fraction (PE-F1):

MFR2(PEC) is the melt flow rate $MFR_5$ (190 °C; 2.16 kg) measured according to ISO 1133 of the polyethylene (PE-C).

Additionally it is preferred that the polyethylene (PE-C) according to this invention has a nominal strain at break of at least 770 %.

Additionally the invention is directed to a geomembrane comprising a polyethylene (PE-C) as defined above and in more detail below. Preferably the geomembrane comprises at least one layer, said layer comprises, preferably comprises by at least 90 wt.-% based on the total weight of said layer, the polyethylene (PE-C) as defined above and in more detail below.

Preferably, the geomembrane as defined above and in more detail below is produced by extrusion.

Finally the present invention is directed to a process for producing a polyethylene (PE-C) as defined above and in more detail below, wherein the process is a sequential polymerization process comprising at least two reactors connected in series, wherein in the first reactor (1st R), preferably loop reactor (LR), the first polyethylene fraction (PE-F1) is produced and in the subsequent second reactor (2nd R), preferably in the gas phase reactor (GPR), the second polyethylene fraction (PE-F2) is produced in the presence of the first polyethylene fraction (PE-F1). Preferably, the polymerization takes place in the presence of a Ziegler-Natta catalyst.

In the following the invention will be described in more detail.

The polyethylene (PE-C) according to this invention is characterized by a specific density ratio measured according to ISO 1 183 / 1 872-2 B in the range of 0.930 to 0.942 $g/cm^3$, more preferably in the range of 0.932 to 0.940 $g/cm^3$, yet more preferably in the range of 0.934 to 0.939 $g/cm^3$, still yet more preferably in the range of 0.935 to below 0.939 $g/cm^3$, like in the range of 0.935 to below 0.938 $g/cm^3$.

The density of the polyethylene (PE-C) is especially influenced by the comonomers present. Thus the polyethylene (PE-C) according to this invention is characterized by rather low comonomer content. Accordingly the amount of comonomer content, i.e. the amount of 1-butene and 1-hexene together, in the polyethylene (PE-C) is preferably in the range of 2.1 to 9.0 wt.-%, more preferably in the range of 2.2 to 8.5 wt.-%, still more preferably in the range of 2.5 to 6.5 wt.-%, yet more preferably in the range of 2.6 to 5.0 wt.-%, based on the total weight of the polyethylene (PE-C).

Preferably, the polyethylene (PE-C) according to this invention is derived from the monomer units "ethylene", "1-butene" and 1-hexene only.

Accordingly it is preferred that the amount of 1-butene in the polyethylene (PE-C) is preferably in the range of 0.05 to 1.2 wt.-%, more preferably in the range of 0.1 to 0.8 wt.-%, yet more preferably in the range of 0.1 to 0.6 wt.-%, based on the total weight of the polyethylene (PE-C).

Additionally or alternatively to the previous paragraph it is preferred that the amount of 1-hexene in the polyethylene (PE-C) is preferably in the range of 1.0 to 8.5 wt.-%, more preferably in the range of 1.5 to 8.0 wt.-%, still more preferably in the range of 1.5 to 7.0 wt.-%, yet more preferably in the range of 2.0 to 6.5 wt.-%, still yet more preferably in the range of 2.1 to 5.5 wt.-%, like in the range of 2.5 to 5.5 wt.-%, based on the total weight of the polyethylene (PE-C).

The polyethylene (PE-C) is defined by a specific melt flow rate. Accordingly polyethylene (PE-C) according to this invention has a melt flow rate $MFR_{21}$ (190 °C; 21.6 kg) measured according to ISO 1133, in the range of 2.0 to 40 g/10min, preferably in the range of 2.0 to 30 g/10min, more preferably in the range of 3.0 to 20 g/10min, yet more preferably in the range of 4.0 to 15 g/10min, still yet more preferably in the range of 5.0 to 15 g/10min, like in the range of 5.0 to 12.0 g/10min.

Additionally it is preferred that the polyethylene (PE-C) has melt flow rate $MFR_5$ (190 °C; 5 kg) measured according to ISO 1133 in the range of 0.05 to 2.0 g/10min, more preferably in the range of 0.1 to 1.5, yet more preferably in the range of 0.1 to 1.0 g/10min.

Accordingly it is especially preferred that the polyethylene (PE-C) has a flow rate ratio (FFR; $MFR_{21}/MFR_5$) of at least 15, more preferably in the range of 15 to 30, yet more preferably in the range of 16 to 25, like in the range of 16 to 23.

Further it is preferred that the polyethylene (PE-C) has a melt flow rate $MFR_2$ (190 °C; 2.16 kg) measured according to ISO 1133 in the range of 0.01 to 0.5 g/10min, more preferably in the range of 0.02 to 0.4, yet more preferably in the range of 0.03 to 0.3 g/10min.

As discussed in more detail below the polyethylene (PE-C) is at least bimodal in its molecular weight distribution. Accordingly the polyethylene (PE-C) has a rather broad molecular weight distribution, which is reflected in its rheological behavior. Accordingly it is preferred that polyethylene (PE-C) has

(a) a shear thinning index SHI(2.7/210), being the ratio of the viscosity at a complex modulus of 2.7 kPa and of 210 kPa of at least 15.0; more preferably in the range of 15.0 to 25.0, still more preferably in the range of 16.0 to 22.0. and/or

(b) a polydispersity index (PDI) of at least 1.4, like in the range of 1.4 to 2.5, more preferably of at least 1.5, like in the range of 1.5 to 2.5, yet more preferably in the range of 1.5 to 2.0, still yet more preferably in the range of 1.5 to 1.8.

Additionally it is appreciated that the polyethylene (PE-C) has a molecular weight distribution (Mw/Mn) in the range of 15 to 45, more preferably in the range of 20 to 40, yet more preferably in the range of 24 to 33.

Further it is preferred that the polyethylene (PE-C) has a nominal strain at break of at least 770 %, more preferably of at least 790 %, still more preferably in the range of 790 to 850 %, yet more preferably in the range of 795 to 845 %, still yet more preferably in the range of 800 to 835 %, like in the range of 810 to 830 %.

The polyethylene (PE-C) according to this invention comprises at least two different fractions, i.e. the first polyethylene fraction (PE-F1) and the second polyethylene fraction (PE-F2). The term "fraction" according to this invention shall indicate that the polyethylene (PE-C) comprises two different polyethylenes which are preferably produced in a sequential polymerization reactor. Further the "term" fraction shall indicate that the polyethylene (PE-C) does not contain elastomeric (co)polymers forming inclusions as a second phase for improving mechanical properties. A polymer containing elastomeric (co)polymers as insertions of a second phase would by contrast be called heterophasic and is not part of the present invention. The presence of second phases or the so called inclusions are for instance visible by high resolution microscopy, like electron microscopy or atomic force microscopy, or by dynamic mechanical thermal analysis (DMTA). Specifically in DMTA the presence of a multiphase structure can be identified by the presence of at least two distinct glass transition temperatures. Accordingly the first polyethylene fraction (PE-F1) and the second polyethylene fraction (PE-F2) of the polyethylene (PE-C) are miscible with each other and thus the polyethylene (PE-C) shows just one phase.

The polyethylene (PE-C) may comprise further polymer fractions which are miscible with the first polyethylene fraction (PE-F1) and the second polyethylene fraction (PE-F2) however it is preferred that the polyethylene (PE-C) consists of the two polyethylene fractions (PE-F1) and (PE-F2). In case the polyethylene (PE-C) comprises further polymers, they are present in minor amounts. Minor amounts of polymers, are amounts not exceeding 10 wt.-%, more preferably not exceeding 5 wt.-%, based on the total weight of the polyethylene (PE-C). Typically such additional polymers may present due to the fact that additives are added in the form of a master batch. However these polymers used in the masterbatch does not affect the properties of the polyethylene (PE-C). Accordingly the term "consisting of" as mentioned above does not exclude the presence of additives (and the possible polymers used in masterbatches) but any other additional polymer. Thus in one specific embodiment, the polyethylene (PE-C) consists of the first polyethylene fraction (PE-F1), the second polyethylene fraction (PE-F2) and optional additives in an amount not exceeding 10 wt.-%, preferably not exceeding 5 wt.-%, based on the total amount of the polyethylene (PE-C).

Accordingly it is preferred that the weight ratio between the first polyethylene fraction (PE-F1) and the second polyethylene fraction (PE-F2) is equal or below 1.0, more preferably in the range of 1/8 to 8/9, yet more preferably in the range of 1/8 to 4/5, still more preferably 1/4 to 3/4, still yet more preferably in the range of 1/3 to 3/4.

Additionally or alternatively to the previous paragraph, the polyethylene (PE-C) comprises, preferably consists of,

(a) 30 to equal or below 50 wt.-%, more preferably 30 to equal or below 45, yet more preferably in the range of 38 to 44 wt.-%, of the first polyethylene fraction (PE-F1);
(b) equal or above 50 to 70 wt.-%, more preferably equal or below 55 to 70 wt.-%, yet more preferably in the range of 56 to 62 wt.-%, of the second polyethylene fraction (PE-F2); and
(c) optionally equal or below 10 wt.-%, more preferably equal or below 5 wt.-%, of additives

based on the total amount of the polyethylene (PE-C).

In the following the first polyethylene fraction (PE-F1) and the second polyethylene fraction (PE-F2) of the polyethylene (PE-C) are described in more detail.

The first polyethylene fraction (PE-F1) is an ethylene copolymer of ethylene and 1-butene as will be explained in more detail below. The density is mainly dependent on the comonomer type and amount. Accordingly the density of the first polyethylene fraction (PE-F1) is preferably more than 0.950 g/cm$^3$, more preferably in the range of more than 0.950 to 0.971 g/cm$^3$, still more preferably in the range of 0.952 to 0.969 g/cm$^3$, yet more preferably in the range of 0.954 to 0.968 g/cm$^3$, like in the range of 0.956 to 0.965 g/cm$^3$.

As mentioned above the first polyethylene fraction (PE-F1) is an ethylene copolymer of ethylene and 1-butene. In other words the first polyethylene fraction (PE-F1) contains only units derived from ethylene and 1-butene. The 1-butene content in such an ethylene copolymer preferably does not exceed 1.5 wt.-%, more preferably is in the range of 0.1 to 1.5 wt.-%, still more preferably is in the range of 0.2 to 1.3 wt.-%, yet more preferably is in the range of 0.3 to 1.2 wt.-%, like in the range of 0.5 to 1.2 wt.-%.

Preferably the first polyethylene fraction (PE-F1) has a melt flow rate MFR$_2$ (190 °C; 2.16 kg) measured according to ISO 1133, in the range of 250 to 450 g/10min, more preferably in the range of 270 to 400 g/10min, still more preferably in the range of more than 280 to 420 g/10min, like in the range of 285 to 420 g/10min.

Accordingly, the polyethylene (PE-C) complies with in-equation (Ib),

$$21.0 \leq \frac{MFR2(PEF1)}{MFR21(PEC)} \leq 35.0 \qquad (Ib)$$

wherein

MFR2(PF1) is the melt flow rate MFR$_2$ (190 °C; 2.16 kg) measured according to ISO 1133 of the first polyethylene fraction (PE-F1):

MFR21(PEC) is the melt flow rate MFR$_{21}$ (190 °C; 21.6 kg) measured according to ISO 1133 of the polyethylene (PE-C).

Additionally or alternatively to in-equation (Ib), it is preferred that the polyethylene (PE-C) complies with in-equation (II), more preferably with in-equation (IIa), still more preferably with in-equation (IIb), still yet more preferably with in-equation (IIc)

$$\frac{MFR2(PEF1)}{MFR5(PEC)} \geq 400 \qquad (II)$$

$$400 \leq \frac{MFR2(PEF1)}{MFR5(PEC)} \leq 800 \qquad (IIa)$$

$$450 \leq \frac{MFR2(PEF1)}{MFR5(PEC)} \leq 700 \qquad \text{(IIb)}$$

$$520 \leq \frac{MFR2(PEF1)}{MFR5(PEC)} \leq 650 \qquad \text{(IIc)}$$

wherein

MFR2(PF1) is the melt flow rate $MFR_2$ (190 °C; 2.16 kg) measured according to ISO 1133 of the first polyethylene fraction (PE-F1):

MFR5(PEC) is the melt flow rate $MFR_5$ (190 °C; 5 kg) measured according to ISO 1133 of the polyethylene (PE-C).

Additionally or alternatively to in-equations (Ib) and (II), it is preferred that the polyethylene (PE-C) complies with in-equation (III), more preferably with in-equation (IIIa), still more preferably with in-equation (IIIb), still yet more preferably with in-equation (IIIc)

$$\frac{MFR2(PEF1)}{MFR2(PEC)} \geq 2000 \text{ (III)}$$

$$2000 \leq \frac{MFR2(PEF1)}{MFR5(PEC)} \leq 3000 \qquad \text{(IIIa)}$$

$$2100 \leq \frac{MFR2(PEF1)}{MFR5(PEC)} \leq 2800 \qquad \text{(IIIb)}$$

$$2150 \leq \frac{MFR2(PEF1)}{MFR5(PEC)} \leq 2500 \qquad \text{(IIIc)}$$

wherein

MFR2(PF1) is the melt flow rate $MFR_2$ (190 °C; 2.16 kg) measured according to ISO 1133 of the first polyethylene fraction (PE-F1):

MFR2(PEC) is the melt flow rate $MFR_5$ (190 °C; 2.16 kg) measured according to ISO 1133 of the polyethylene (PE-C).

The second polyethylene fraction (PE-F2) is an ethylene copolymer of ethylene and 1-hexene. The density is mainly dependent on the comonomer type and amount. Accordingly the density of the second polyethylene fraction (PE-F2) is preferably in the range of more than 0.88 to 0.935 $g/cm^3$, still more preferably in the range of 0.905 to 0.930 $g/cm^3$, yet more preferably in the range of 0.915 to 0.930 $g/cm^3$, still yet more preferably in the range of 0.918 to 0.930 $g/cm^3$, like in the range of above 0.921 to 0.930 $g/cm^3$.

The polyethylene (PE-C) according to this invention is preferably produced in a continuous polymerization reactor system. More preferably the polyethylene (PE-C) is produced in a polymerization reactor system comprising at least a slurry polymerization in a loop reactor followed by a gas phase polymerization in a gas phase reactor. Even more preferred in both reactors the same catalyst is used, e.g. a Ziegler-Natta catalyst.

A loop reactor - gas phase reactor system is well known as Borealis technology, i.e. as a BORSTAR® reactor system. Thus the polyethylene (PE-C) of the invention is preferably formed in a two stage process comprising a first slurry loop polymerization followed by gas phase polymerization. Such multistage process is disclosed e.g. in EP 5 17 868.

Accordingly it is preferred that the process for producing the polyethylene (PE-C) as defined in the present invention comprises at least two reactors connected in series, wherein in the first reactor ($1^{st}$ R), preferably loop reactor (LR), the first polyethylene fraction (PE-F1) is produced and in the subsequent second reactor (2$^{nd}$ R), preferably in the gas phase reactor (GPR), the second polyethylene fraction (PE-F2) is produced in the presence of the first polyethylene fraction (PE-F1). Preferably the polymerization process in both reactors takes place in the presence of a Ziegler-Natta catalyst.

Accordingly it is preferred that in the first reactor (1$^{st}$ R) ethylene and 1-butene is polymerized to form the first polyethylene fraction (PE-F1), i.e. the copolymer of ethylene and 1-butene, and in the second reactor (2$^{nd}$ R) ethylene and 1-hexene is polymerized to form the seond polyethylene fraction (PE-F2), i.e. the copolymer of ethylene and 1-hexene.

The conditions used in such a process are well known. For the slurry reactor (first reactor (1$^{st}$ R)), the reaction temperature will generally be in the range 60 to 110°C, e.g. 85 to 110°C, the reactor pressure will generally be in the range 5 to 80 bar, e.g. 50 to 65 bar, and the residence time will generally be in the range 0.3 to 5 hours, e.g. 0.5 to 2 hours. The diluent used will generally be an aliphatic hydrocarbon having a boiling point in the range -70 to +100°C. In such reactors, polymerization may if desired be effected under supercritical conditions. Slurry polymerization may also be carried out in bulk where the reaction medium is formed from the monomer being polymerized.

For gas phase reactors, the reaction temperature used will generally be in the range 60 to 115°C, e.g. 70 to 110°C, the reactor pressure will generally be in the range 10 to 25 bar, and the residence time will generally be 1 to 8 hours. The gas used will commonly be a nonreactive gas such as nitrogen or low boiling point hydrocarbons such as propane together with monomer, e.g. ethylene and 1-hexene.

As an example a chain-transfer agent, preferably hydrogen, is added as required to the reactors, and at least 100 to preferably at least 200, and up to 1500, preferably up to 800 moles of $H_2$/kmoles of ethylene are added to the loop reactor, when the first polyethylene fraction (PE-F1) is produced in this reactor, and 0 to 40 or 0 to 30, moles of $H_2$/kmoles of ethylene are added to the gas phase reactor when this reactor is producing the second polyethylene fraction (PE-F2).

Preferably, the first polyethylene fraction (PE-F1) is produced in a continuously operating loop reactor where ethylene and 1-butene is polymerized in the presence of a polymerization catalyst as stated above and a chain transfer agent such as hydrogen. The diluent is typically an inert aliphatic hydrocarbon, preferably isobutane or propane. Preferably the mole-ratio between 1-butene and ethylene (C4/C2) is in the range of 100 to 500 mol/kmol, more preferably in the range of 150 to 400 mol/kmol, yet more preferably in the range of 200 to 350 mol/kmol.

The reaction product is then transferred, preferably to continuously operating gas phase reactor. The second polyethylene fraction (PE-F2) can then be formed in a gas phase reactor using preferably the same catalyst. In the gas phase reactor ethylene and 1-hexene is fed. Depending on the desired end amount of 1-hexene in the second polyethylene fraction (PE-F2) and thus in the polyethylene (PE-C) may vary. However it is preferred that the mol-ratio between 1-hexene and ethylene (C6/C2) is in the range of 20 to below 100 mol/kmol, more preferably in the range of 30 to 98 mol/kmol, yet more preferably in the range of 50 to 97 mol/kmol.

Prepolymerisation step may precede the actual polymerization process.

The polyethylene (PE-C) of the present invention is produced by using a Ziegler-Natta catalyst as is also known in the art. Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, WO 2004/000933, EP 8 10 235 and WO 99/51646.

In a very preferable embodiment of the invention the polyethylene (PE-C) is produced using a Ziegler Natta catalysts disclosed in WO 2004/000933 or EP 6 88 794.

Conventional cocatalysts, supports/carriers, electron donors etc can be used as very well known in the state of art.

The obtained reaction product of said polymerization process is typically pelletized in well-known manner and the pellets of polyethylene (PE-C) are then used for geomembrane formation.

Accordingly the invention is also directed to the use of the polyethylene (PE-C) as defined in the present invention in a geomembrane. More specifically the invention is directed to the use of the polyethylene (PE-C) as defined in the present invention in at least one layer of a geomembrane. More preferably the amount of the polyethylene (PE-C) in the layer is at least 90 wt.-%, more preferably at least 95 wt.-%. Yet more preferably, the layer consists of the polyethylene (PE-C) as defined in the instant invention.

In a further aspect, the present invention is directed to a geomembrane comprising a polyethylene (PE-C) as defined in the present invention. Still more preferably the invention is directed to a geomembrane, wherein at least one layer of the geomembrane comprises, preferably comprises by at least 90 wt.-% based on the total weight of said layer, yet more preferably comprises by at least 95 wt.-% based on the total weight of said layer, still yet more preferably consists of, the polyethylene (PE-C) as defined in the present invention. The geomembrane can be produced by any standard extrusion methods well known in the art. In a preferred aspect the geomembrane is produced by coextrusion, like flat sheet extrusion process or blown extrusion process.

In the following the present invention is further illustrated by means of examples.

**EXAMPLES**

**A. Measuring methods**

The following definitions of terms and determination methods apply for the above general description of the invention as well as to the below examples unless otherwise defined. **Calculation** of the 1-hexene content of the second polyethylene fraction (PE-F2):

$$\frac{C(PEC) - w(PEF1)x\, C(PEF1)}{w(PEF2)} = C(PEF2)$$

wherein

w(PEF1)   is the weight fraction of the first polyethylene fraction (PE-F1),
w(PEF2)   is the weight fraction of the second polyethylene fraction (PE-F2),
C(PEF1)   is the 1-hexene content [in wt%] of the first polyethylene fraction (PE-F1),
C(PEC)    is the 1-hexene content [in wt%] of the polyethylene (PE-C), i.e. of the mixture of the first polyethylene fraction (PE-F1) and the second polyethylene fraction (PE-F2),
C(PEF2)   is the calculated 1-hexene content [in wt%] of the second polyethylene fraction (PE-F2).

**Calculation** of the melt flow rate $MFR_2$ (190 °C; 2.16 kg) of the second polyethylene fraction (PE-F2):

$$MFR(PEF2) = 10^{\left[\frac{\log(MFR(PEC)) - w(PEF1)\, x\, \log(MFR(PEF1))}{w(PEF2)}\right]}$$

wherein

w(PEF1)    is the weight fraction of the first polyethylene fraction (PE-F1),
w(PEF2)    is the weight fraction of the second polyethylene fraction (PE-F2),
MFR(PEF1)  is the melt flow rate $MFR_2$ (190 °C; 2.16 kg) [in g/10min] measured according ISO 1133 of the first polyethylene fraction (PE-F1),
MFR(PEC)   is the melt flow rate $MFR_2$ (190 °C; 2.16 kg) [in g/10min] measured according ISO 1133 of the polyethylene (PE-C), i.e. of the mixture of the first polyethylene fraction (PE-F1) and the second polyethylene fraction (PE-F2),
MFR(PEF2)  is the calculated melt flow rate $MFR_2$ (190 °C; 2.16 kg) [in g/10min] of the second polyethylene fraction (PE-F2).

**Calculation** of the melt flow rate $MFR_5$ (190 °C; 5 kg) of the second polyethylene fraction (PE-F2):

$$MFR(PEF2) = 10^{\left[\frac{\log(MFR(PEC)) - w(PEF1)\, x\, \log(MFR(PEF1))}{w(PEF2)}\right]}$$

wherein

w(PEF1)    is the weight fraction of the first polyethylene fraction (PE-F1),
w(PEF2)    is the weight fraction of the second polyethylene fraction (PE-F2),
MFR(PEF1)  is the melt flow rate $MFR_5$ (190 °C; 5 kg) [in g/10min] measured according ISO 1133 of the first polyethylene fraction (PE-F1),
MFR(PEC)   is the melt flow rate $MFR_5$ (190 °C; 5 kg) [in g/10min] measured according ISO 1133 of the polyethylene (PE-C), i.e. of the mixture of the first polyethylene fraction (PE-F1) and the second polyethylene fraction (PE-F2),
MFR(PEF2)  is the calculated melt flow rate $MFR_5$ (190 °C; 5 kg) [in g/10min] of the second polyethylene fraction (PE-F2).

**Calculation** of the melt flow rate MFR$_{21}$ (190 °C; 21.6 kg) of the second polyethylene fraction (PE-F2):

$$MFR(PEF2) = 10^{\left[\frac{\log(MFR(PEC)) - w(PEF1)\, x\, \log(MFR(PEF1))}{w(PEF2)}\right]}$$

wherein

w(PEF1)        is the weight fraction of the first polyethylene fraction (PE-F1),
w(PEF2)        is the weight fraction of the second polyethylene fraction (PE-F2),
MFR(PEF1)    is the melt flow rate MFR$_{21}$ (190 °C; 21.6 kg) [in g/10min] measured according ISO 1133 of the first polyethylene fraction (PE-F1),
MFR(PEC)    is the melt flow rate MFR$_{21}$ (190 °C; 21.6 kg) [in g/10min] measured according ISO 1133 of the polyethylene (PE-C), i.e. of the mixture of the first polyethylene fraction (PE-F1) and the second polyethylene fraction (PE-F2),
MFR(PEF2)    is the calculated melt flow rate MFR$_{21}$ (190 °C; 21.6 kg) [in g/10min] of the second polyethylene fraction (PE-F2).

**Calculation** of the density of the second polyethylene fraction (PE-F2):

$$\frac{w(PEF2)}{\left(\frac{1}{P(PEC)} - \frac{w(PEF1)}{P(PEF1)}\right)} = P(PEF2)$$

w(PEF1)        is the weight fraction of the first polyethylene fraction (PE-F1),
w(PEF2)        is the weight fraction of the second polyethylene fraction (PE-F2),
P(PEF1)        is the density [in g/cm$^3$] measured according ISO 1 183 / 1 872-2 B of the first polyethylene fraction (PE-F1),
P(PEC)        is the density [in g/cm$^3$] measured according ISO 1 183 / 1 872-2 B of the polyethylene (PE-C), i.e. of the mixture of the first polyethylene fraction (PE-F1) and the second polyethylene fraction (PE-F2),
P(PEF2)        is the calculated density [in g/cm$^3$] of the second polyethylene fraction (PE-F2).

**Density** of the polymer was measured according to ISO 1 183 / 1 872-2 B
**MFR$_2$, MFR$_5$ and MFR$_{21}$** were measured according to ISO 1133 at 190°C at loads of 2.16, 5.0, and 21.6 kg respectively.
**Molecular weights and molecular weight distribution,** The weight average molecular weight $M_w$ and the molecular weight distribution (MWD = $M_w/M_n$ wherein $M_n$ is the number average molecular weight and $M_w$ is the weight average molecular weight) is measured according to ISO 1 6014-1:2003 and ASTM D 6474-12. A HT GPC from Polymer Char with infrared (IR5 MCT detector) and viscosity detection was used. Samples are separated on a set of 3 Olexis PL gel mixed bed columns with 13 micrometer particle size, column dimensions 300 mm * 7.5 mm inner diameter, a guard column of 50 mm length * 7.8 mm diameter before the analytical columns with same mixed bed gel. Samples were dissolved in an auto sampler at 160 °C for 60 minutes, and passed an inline filter before injection. Samples were run at 150 °C over the columns, the detectors were kept at 160 °C. Flow rate was 1 ml / min using 1,2,4 - Trichlorobenzene. The solvent was subjected to distillation before use, and was stabilized with 0.2 g/L of Irg1076 (Octadecyl-3-(3,5-di-tert.butyl-4-hydroxyphenyl)-propionate), injection volume is 200 microliters, method is based on ASTM D 6474-12, ISO 16014-1.
Calibration was performed with 15 narrowly distributed PS standards of mol masses ranging from about 670gr/mole to about 8 Mio grams/mole. All samples were prepared by dissolving 16 mg (+- 0.2 g) of polymer in 8 ml of 1,2,4 -Tri-chlorobenzene stabilized with Irg 1076 at 160 °C for 60 Minutes by the instruments autosampler with continous automatic mild shaking prior to injection. Samples were kept at a maximum temperature of 160 °C for max. of 3 hours. The column set plate count is calculated for every sample scan by the software. Mark Houwink constants were used as given in ASTM D 6474-99.

**Quantification of microstructure by NMR spectroscopy**

Quantitative nuclear-magnetic resonance (NMR) spectroscopy was used to quantify the comonomer content of the polymers.

Quantitative $^{13}C\{^{1}H\}$ NMR spectra recorded in the molten-state using a Bruker Advance III 500 NMR spectrometer operating at 500.13 and 125.76 MHz for $^{1}H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382; Parkinson, M., Klimke, K., Spiess, H.W., Wilhelm, M., Macromol. Chem. Phys. 2007;208:2128; Castignolles, P., Graf, R., Parkinson, M., Wilhelm, M., Gaborieau, M., Polymer 50 (2009) 2373). Standard single-pulse excitation was employed utilising the NOE at short recycle delays (Pollard, M., Klimke, K., Graf, R., Spiess, H.W., Wilhelm, M., Sperber, O., Piel, C., Kaminsky, W., Macromolecules 2004;37:813; Klimke, K., Parkinson, M., Piel, C., Kaminsky, W., Spiess, H.W., Wilhelm, M., Macromol. Chem. Phys. 2006;207:382) and the RS-HEPT decoupling scheme (Filip, X., Tripon, C., Filip, C., J. Mag. Resn. 2005, 176, 239; Griffin, J.M., Tripon, C., Samoson, A., Filip, C., and Brown, S.P., Mag. Res. in Chem. 2007 45, S1, S198). A total of 1024 (1k) transients were acquired per spectra.

Quantitative $^{13}C\{^{1}H\}$ NMR spectra were processed, integrated and relevant quantitative properties determined from the integrals. All chemical shifts are internally referenced to the bulk methylene signal ($\delta+$) at 30.00 ppm.

The amount of ethylene was quantified using the integral of the methylene ($\delta+$) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed and the comonomer fraction calculated as the fraction of 1-butene in the polymer with respect to all monomer in the polymer:

$$fBtotal = ( Btotal / ( Etotal + Btotal + Htotal )$$

The amount isolated 1-butene incorporated in EEBEE sequences was quantified using the integral of the $_*B2$ sites at 38.3 ppm accounting for the number of reporting sites per comonomer:

$$B = I_{*B2}$$

The amount consecutively incorporated 1-butene in EEBBEE sequences was quantified using the integral of the $\alpha\alpha B2B2$ site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the $\beta\beta B2B2$ site at 24.7 ppm accounting for the number of reporting sites per comonomer:

$$BEB = 2 * I\beta\beta B2B2$$

Due to the overlap of the *B2 and *$\beta$B2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = ( Btotal / ( Etotal + Btotal + Htotal )$$

Characteristic signals corresponding to the incorporation of 1-hexene were observed and the comonomer fraction calculated as the fraction of 1-hexene in the polymer with respect to all monomer in the polymer:

$$fHtotal = ( Htotal / ( Etotal + Btotal + Htotal )$$

The amount isolated 1-hexene incorporated in EEHEE sequences was quantified using the integral of the *B4 sites at 39.9 ppm accounting for the number of reporting sites per comonomer:

$$H = I_{*B4}$$

The amount consecutively incorporated 1-hexene in EEHHEE sequences was quantified using the integral of the $\alpha\alpha B4B4$ site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the $\beta\beta B4B4$ site at 24.7 ppm accounting for the number of reporting sites per comonomer:

$$HEH = 2 * I\beta\beta B4B4$$

The total mole fraction of 1-hexene in the polymer was then calculated as:

$$fH = ( Htotal / ( Etotal + Btotal + Htotal )$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B\ [wt\%] = 100 * (\ fB * 56.11\ )\ /\ (\ (fB * 56.11) + (fH * 84.16) + ((1\text{-}(fB + fH)) * 28.05)\ )$$

$$H\ [wt\%] = 100 * (\ fH * 84.16\ )\ /\ (\ (fB * 56.11) + (fH * 84.16) + ((1\text{-}(fB + fH)) * 28.05)\ )$$

Klimke, K., Parkinson, M., Piel, C., Kaminsky, W., Spiess, H.W., Wilhelm, M., Macromol. Chem. Phys. 2006;207:382.

Parkinson, M., Klimke, K., Spiess, H.W., Wilhelm, M., Macromol. Chem. Phys. 2007;208:2128.

Pollard, M., Klimke, K., Graf, R., Spiess, H.W., Wilhelm, M., Sperber, O., Piel, C., Kaminsky, W., Macromolecules 2004;37:813.

Filip, X., Tripon, C., Filip, C., J. Mag. Resn. 2005, 176, 239

Griffin, J.M., Tripon, C., Samoson, A., Filip, C., and Brown, S.P., Mag. Res. in Chem. 2007 45, S1, S198

Castignolles, P., Graf, R., Parkinson, M., Wilhelm, M., Gaborieau, M., Polymer 50 (2009) 2373

Busico, V., Cipullo, R., Prog. Polym. Sci. 26 (2001) 443

Busico, V., Cipullo, R., Monaco, G., Vacatello, M., Segre, A.L., Macromoleucles 30 (1997) 6251

Zhou, Z., Kuemmerle, R., Qiu, X., Redwine, D., Cong, R., Taha, A., Baugh, D. Winniford, B., J. Mag. Reson. 187 (2007) 225

Busico, V., Carbonniere, P., Cipullo, R., Pellecchia, R., Severn, J., Talarico, G., Macromol. Rapid Commun. 2007, 28, 1128

Resconi, L., Cavallo, L., Fait, A., Piemontesi, F., Chem. Rev. 2000, 100, 1253

**Rheology**

The characterization of polymer melts by dynamic shear measurements complies with ISO standards 6721-1 and 6721-10. The measurements were performed on an Anton Paar MCR301 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at 190°C applying a frequency range between 0.0154 and 500 rad/s and setting a gap of 1.2 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t)\ (1)$$

If the applied strain is within the linear viscoelastic regime, the resulting sinusoidal stress response can be given by

$$\sigma(t) = \sigma_0 \sin(\omega t + \delta) \qquad (2)$$

where

$\sigma_0$ and $\gamma_0$ are the stress and strain amplitudes, respectively
$\omega$ is the angular frequency
$\delta$ is the phase shift (loss angle between applied strain and stress response)
$t$ is the time

Dynamic test results are typically expressed by means of several different rheological functions, namely the shear storage modulus G', the shear loss modulus, G", the complex shear modulus, G*, the complex shear viscosity, $\eta$*, the dynamic shear viscosity, $\eta$', the out-of-phase component of the complex shear viscosity, $\eta$", and the loss tangent, tan $\delta$ which can be expressed as follows:

$$G' = \frac{\sigma_0}{\gamma_0} \cos \delta \quad [Pa] \qquad (3)$$

$$G'' = \frac{\sigma_0}{\gamma_0} \sin \delta \quad [Pa] \qquad (4)$$

$$G^* = G' + iG'' \quad [Pa] \qquad (5)$$

$$\eta^* = \eta' - i\eta'' \quad [Pa \cdot s] \, (6)$$

$$\eta' = \frac{G''}{\omega} \quad [Pa \cdot s] \qquad (7)$$

$$\eta'' = \frac{G'}{\omega} \quad [Pa \cdot s] \qquad (8)$$

The values of storage modulus (G'), loss modulus (G"), complex modulus (G*) and complex viscosity ($\eta^*$) were obtained as a function of frequency ($\omega$). Thereby, e.g. $\eta^*_{0.05\,rad/s}$ (eta*$_{0.05\,rad/s}$) is used as abbreviation for the complex viscosity at the frequency of 0.05 rad/s or $\eta^*_{300\,rad/s}$ (eta*$_{300\,rad/s}$) is used as abbreviation for the complex viscosity at the frequency of 300 rad/s.

Besides the above mentioned rheological functions one can also determine other rheological parameters such as the so-called elasticity index EI(x). The elasticity index EI(x) is the value of the storage modulus, G', determined for a value of the loss modulus, G", of x kPa and can be described by equation 9.

$$EI(x) = G' for (G'' = x\, kPa) \quad [Pa] \qquad (9)$$

For example, the EI (5kPa) is defined by the value of the storage modulus G', determined for a value of G" equal to 5 kPa.

The determination of so-called Shear Thinning Indexes is done, as described in equation 10.

$$SHI \left(\frac{x}{y}\right) = \frac{Eta^* for\,(G^*=x\,kPa)}{Eta^* for\,(G^*=y\,kPa)} \quad [Pa] \qquad (10)$$

For example, the SHI (2.7/210) is defined by the value of the complex viscosity, in Pa·s, determined for a value of G* equal to 2.7 kPa, divided by the value of the complex viscosity, in Pa·s, determined for a value of G* equal to 210 kPa.

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus "Interpolate y-values to x-values from parameter" and the "logarithmic interpolation type" were applied.

The polydispersity index, PDI, is defined by equation 11.

$$PDI = \frac{10^5}{G'(\omega_{COP})}; \; \omega_{COP} \, for \, (G' = G'') \qquad (11)$$

where, $\omega_{COP}$ is the cross-over angular frequency, determined as the angular frequency for which the storage modulus, G' equals the loss modulus, G".

References:

[1] Rheological characterization of polyethylene fractions" Heino, EX., Lehtinen, A., Tanner I, Seppala, J., Neste Oy, Porvoo, Finland, Theor. Appl. RheoL, Proc. Int. Congr. Rheol, 1 1th (1992), 1, 360-362

[2] The influence of molecular structure on some rheoiogicai properties of polyethylene", Heino, E.L., Borealis Polymers Oy, Porvoo, Finland, Annual Transactions of the Nordic Rheology Society, 1995.).

[3] Definition of term relating to the non-ultimate mechanical properties of polymers. Pure & Appl. Chem., Vol. 70, No. 3, pp. 701 -754, 1998.

**Geomembrane:**

**Tensile tests** are performed according to ASTM D 6693 at +23°C on compression molded specimen (ASTM D 638 Type-4; 2 mm thickness) prepared by Laboratory-Platen-Presses 396x396mm2. For determining tensile stress at yield (in MPa), tensile strain at yield (in %), tensile strength (in MPa) tensile strain at tensile strength (in %), tensile stress at break (in MPa) and tensile strain at break (in %) the aforementioned tensile test according to ASTM D 6693 at +23°C was continued with a gauge length of 25mm; grip-to-grip distance of 50mm; and testing speed of 50 mm/min until the specimen broke.

**Film Test:**

Tensile tests are performed according to ISO 527-3 at +23°C on film specimen (ISO 527-3 type 2), measured on both machine and transverse direction. Tensile modulus calculation refer to ASTM D 882, 1% secant modulus (in MPa) is measured at a 1% strain, with testing speed of 5mm/min. Tensile stress at yield (in MPa), nominal strain at yield (in %), tensile stress at break (in MPa), and nominal tensile stress at break (in MPa) was measured according to ISO 527-3, using 50mm gauge length and 100mm grip-to-grip distance, with testing speed of 500mm/min.

**Tear resistance** (determined as Elmendorf tear (N): Applies for the measurement in both machine and transverse directions. The tear strength is measured using the ISO 6383-2, ASTM D 1922 method. The force required to propagate tearing across a film sample is measured using a pendulum device. The pendulum swings under gravity through an arc, tearing the specimen from pre-cut slit. The specimen is fixed on one side by the pendulum and on the other side by a stationary clamp. The tear resistance is the force required to tear the specimen, expressed in Newtons, at a specific specimen thickness. The specimen thickness is reported in micron(s).

**2. Examples**

The catalyst used in the polymerization processes for the polyethylene (PE-C) was prepared as follows:

Complex preparation:

87 kg of toluene was added into the reactor. Then 45.5 kg Bomag A in heptane (butyloctylmagnesium (n-$C_4H_9)_{1.5}$(n-$C_8H_{17})_{0.5}$ Mg with a magnesium content of 2.92 % and a density of 0.8451 g/ml) was also added in the reactor. 161 kg 99.8 % 2-ethyl-1-hexanol was then introduced into the reactor at a flow rate of 24 to 40 kg/h. The molar ratio between Bomag A and 2-ethyl-1-hexanol was 1:1.83.

Solid catalyst component preparation:

275 kg silica (ES747JR of Crossfield, having average particle size of 20 $\mu$m) activated at 600 °C in nitrogen was charged into a catalyst preparation reactor. Then, 411 kg 20 % EADC (Ethyl aluminium dichloride) (2.0 mmol/g silica) diluted in 555 litres pentane was added into the reactor at ambient temperature during one hour. The temperature was then increased to 35 °C while stirring the treated silica for one hour. The silica was dried at 50 °C for 8.5 hours. Then 655 kg of the complex prepared as described above (2 mmol Mg/g silica) was added at 23 °C during ten minutes. 86 kg pentane was added into the reactor at 22 °C during ten minutes. The slurry was stirred for 8 hours at 50 °C. Finally, 52 kg $TiCl_4$ was added during 0.5 hours at 45 °C. The slurry was stirred at 40 °C for five hours. The catalyst was then dried by purging with nitrogen.

The thus obtained catalyst was used along with triethyl-aluminium (TEAL) as co-catalyst. The aluminium to titanium ratio and the polymerization conditions are indicated in table 1.

**Table 1:** Process conditions

|  |  | CE1 | IE1 | IE2 |
|---|---|---|---|---|
| TEAL/Ti | [mol/mol] | 21 | 19 | 20 |

(continued)

| LOOP (PE-F1) | | | | |
|---|---|---|---|---|
| temperature | [mol/kmol] | 85 | 85 | 85 |
| pressure | [mol/kmol] | 58 | 58 | 58 |
| residence time | [h] | 0.9 | 1.1 | 1.1 |
| $H_2$/C2 ratio | [mol/kmol] | 307 | 339 | 370 |
| C4/C2 ratio | [mol/kmol] | 184 | 277 | 300 |
| C4 content | [wt-%] | 0.7 | 0.8 | 0.9 |
| split | [wt-%] | 46 | 40 | 38 |
| $MFR_2$ | [g/10min] | 280 | 304 | 312 |
| Density | [g/cm$^3$] | 0.961 | 0.960 | 0.959 |
| GPR | | | | |
| temperature | [mol/kmol] | 85 | 85 | 85 |
| pressure | [mol/kmol] | 20 | 20 | 20 |
| $H_2$/C2 ratio | [mol/kmol] | 8.1 | 20 | 23 |
| C4/C2 ratio | [mol/kmol] | 0 | 0 | 0 |
| C6/C2 ratio | [mol/kmol] | 68 | 90 | 95 |
| split | [wt-%] | 54 | 60 | 62 |
| $MFR_2$ | [g/10min] | 0.14 | 0.13 | 0.14 |
| $MFR_{21}$ | [g/10min] | 13.9 | 9.9 | 10.8 |
| $MFR_5$ | [g/10min] | 0.55 | 0.51 | 0.56 |
| PE-F2 Density | [g/cm$^3$] | 0.920 | 0.922 | 0.922 |
| Final Density | [g/cm$^3$] | 0.939 | 0.937 | 0.936 |

C2                          ethylene
C4                          1-butene
C6                          1-hexene
$H_2$/C2 ratio              hydrogen / ethylene ratio
C4/C2 ratio                1-butene / ethylene ratio
C6/C2 ratio                1-hexene / ethylene ratio
PE-F2 Density              calculated density of the second polyethylene fraction (PE-F2)
GPR                        gas phase reactor
Loop                       Loop reactor

**Table 2:** Properties

| | | CE1 | IE1 | IE2 |
|---|---|---|---|---|
| $MFR_{21}$ | [g/10min] | 13.9 | 9.9 | 10.8 |
| $MFR_5$ | [g/10min] | 0.55 | 0.51 | 0.56 |
| C4 (total) | [wt-%] | 0.3 | 0.3 | 0.3 |
| C6 (total) | [wt-%] | 2.4 | 2.8 | 3.0 |
| density | [g/cm$^3$] | 0.939 | 0.937 | 0.936 |
| A | [-] | 20 | 31 | 29 |

(continued)

|  |  | CE1 | IE1 | IE2 |
|---|---|---|---|---|
| B | [-] | 509 | 596 | 557 |
| FFR | [-] | 25 | 19 | 19 |
| $M_w/M_n$ | [-] | 15 | 25 | 25 |
| SHI (2.7/210) | [kPa] | n.d. | 18.1 | 18.6 |
| PDI | [-] | n.d. | 1.6 | 1.7 |
| NSB | [%] | 640 | 810 | 820 |

PE-F2 C6      calculated 1-hexene content of the second polyethylene fraction (PE-F2)
A             $MFR_2(PEF1)/MFR_{21}(PEC)$
B             $MFR_2(PEF1)/MFR_5(PEC)$
FFR           $MFR_{21}(PEC)/MFR_5(PEC)$
NSB           nominal strain at break
PR            Puncture resistance
n.d.          not determined

All samples were prepared on a Davis-Standard three-roll cast sheet extruder equipped with a 25 cm die. Extruder zone temperatures were set at 195 °C, die temperature at 200 °C. Roll temperatures were (upper, middle, lower) at 85, 100, 95 °C. Production rate was around 5 kg/hr.

**Table 3:** Properties on film

|  |  | IE1 |
|---|---|---|
| **TD** |  |  |
| Tensile stress | [N/mm$^2$] | 37.2 |
| Elongation@Break | [%] | 872 |
| Stress@Yield | [N/mm$^2$] | 21.2 |
| Elongation@Yield | [%] | 18 |
| Tear resistance | [N/mm] | 184 |
| **MD** |  |  |
| Tensile stress | [N/mm$^2$] | 37.5 |
| Elongation@Break | [%] | 487 |
| Stress@Yield | [N/mm$^2$] | 17.3 |
| Elongation@Yield | [%] | 26 |
| Tear resistance | [N/mm] | 237 |
| **Puncture resistance** | [N] | 584 |

**Claims**

1. Polyethylene (PE-C) comprising at least

   (a) a first polyethylene fraction (PE-F1); said fraction is an ethylene copolymer of ethylene and 1-butene,
   (b) a second polyethylene fraction (PE-F2), said fraction is an ethylene copolymer of ethylene and 1-hexene,

   wherein said polyethylene (PE-C) has

(c) a melt flow rate MFR$_2$, (190 °C; 21.6 kg) measured according to ISO 1133, in the range of 2.0 to 40 g/10min; and
(d) a density measured according to ISO 1 183 / 1 872-2 B in the range of 0.930 to 0.942 g/cm$^3$; and
(e) complies with the in-equation (Ib)

$$21.0 \leq \frac{MFR2(PEF1)}{MFR21(PEC)} \leq 35.0 \quad (Ib)$$

wherein MFR2(PF1) is the melt flow rate MFR$_2$ (190 °C; 2.16 kg) measured according to ISO 1133 of the first polyethylene fraction (PE-F1): MFR21(PEC) is the melt flow rate MFR$_2$, (190 °C; 21.6 kg) measured according to ISO 1133 of the polyethylene (PE-C),

wherein further said first polyethylene fraction (PE-F1) has

(f) a melt flow rate MFR$_2$ (190 °C; 2.16 kg) measured according to ISO 1133, in the range of 250 to 450 g/10min; and
(g) a density measured according to ISO 1 183/ 1 872-2 B of more than 0.950 g/cm$^3$.

2. Polyethylene (PE-C) according to claim 1, wherein the second polyethylene fraction (PE-F2) has a density in the range of 0.88 to 0.935 g/cm$^3$.

3. Polyethylene (PE-C) according to claim 1 or 2, wherein the weight ratio between the first polyethylene fraction (PE-F1) and second polyethylene fraction (PE-F2) is equal or below 1.0, preferably in the range of 1/8 to 8/9.

4. Polyethylene (PE-C) according to any one of the preceding claims, wherein the amount of the first polyethylene fraction (PE-F1) is in the range of 30 to equal or below 45 wt.-% and the amount of the second polyethylene fraction (PE-F2) is in the range of to equal or below 55 to 70 wt.-%, based on the total amount of the polyethylene (PE-C).

5. Polyethylene (PE-C) according to any one of the preceding claims, wherein the polyethylene (PE-C) has

(a) a molecular weight distribution (Mw/Mn) in the range of 15 to 45; and/or
(b) a shear thinning index SHI(2.7/210), being the ratio of the viscosity at a complex modulus of 2.7 kPa and of 210 kPa of at least 15.0;
and/or
(c) a polydispersity index (PDI) of at least 1.5.

6. Polyethylene (PE-C) according to any one of the preceding claims, wherein the polyethylene (PE-C) has flow rate ratio (FFR; MFR$_{21}$/MFR$_5$) of at least 15, wherein the MFR$_5$ is the melt flow rate MFR$_5$ (190 °C; 5 kg) measured according to ISO 1133.

7. Polyethylene (PE-C) according to any one of the preceding claims, wherein the second polyethylene fraction (PE-F2) has a density in the range of 0.880 to 0.935 g/cm$^3$.

8. Polyethylene (PE-C) according to any one of the preceding claims, wherein the polyethylene (PE-C) complies with the in-equation (II)

$$\frac{MFR2(PEF1)}{MFR5(PEC)} \geq 380$$

wherein MFR2(PF1) is the melt flow rate MFR$_2$ (190 °C; 2.16 kg) measured according to ISO 1133 of the first polyethylene fraction (PE-F1): MFR5(PEC) is the melt flow rate MFR$_5$ (190 °C; 5 kg) measured according to ISO 1133 of the polyethylene (PE-C).

9. Polyethylene (PE-C) according to any one of the preceding claims, wherein the polyethylene (PE-C) has a nominal strain at break of at least 770 %.

10. Geomembrane comprising a polyethylene (PE-C) as defined in any one of the preceding claims.

**11.** Geomembrane according to claim 10, wherein at least one layer of the geomembrane comprises, preferably comprises by at least 90 wt.-% based on the total weight of said layer, the polyethylene (PE-C) as defined in any one of the preceding claims 1 to 9.

**12.** Geomembrane according to claim 10 or 11, wherein the geomembrane is produced by extrusion.

**13.** Process for producing a polyethylene (PE-C) as defined in any one of the preceding claims 1 to 9, wherein the process is a sequential polymerization process comprising at least two reactors connected in series, wherein in the first reactor (1st R), preferably loop reactor (LR), the first polyethylene fraction (PE-F1) is produced and in the subsequent second reactor (2nd R), preferably in the gas phase reactor (GPR), the second polyethylene fraction (PE-F2) is produced in the presence of the first polyethylene fraction (PE-F1).

**14.** Process according to claim 13, wherein the polymerization takes place in the presence of a Ziegler-Natta catalyst.

**Patentansprüche**

**1.** Polyethylen (PE-C), umfassend mindestens

(a) eine erste Polyethylen-Fraktion (PE-F1); wobei die Fraktion ein Ethylen-Copolymer von Ethylen und 1-Buten ist,
(b) eine zweite Polyethylen-Fraktion (PE-F2), wobei die Fraktion ein Ethylen-Copolymer von Ethylen und 1-Hexen ist,

wobei das Polyethylen (PE-C) aufweist

(c) eine Schmelze-Fließ-Rate $MFR_{21}$ (190°C; 21,6 kg), gemessen gemäß ISO 1133, in dem Bereich von 2,0 bis 40 g/10 min; und
(d) eine Dichte, gemessen gemäß ISO 1183/1872-2 B, in dem Bereich von 0,930 bis 0,942 $g/cm^3$; und
(e) die Ungleichung (Ib) erfüllt

$$21,0 \leq \frac{MFR2(PEF1)}{MFR21(PEC)} \leq 35,0 \quad \text{(Ib)}$$

worin MFR2(PF1) die Schmelze-Fließ-Rate $MFR_2$ (190°C; 2,16 kg), gemessen gemäß ISO 1133, der ersten Polyethylen-Fraktion (PE-F1) ist; MFR21(PEC) die Schmelze-Fließ-Rate $MFR_{21}$ (190°C; 21,6 kg), gemessen gemäß ISO 1133, von dem Polyethylen (PE-C), ist,

wobei weiterhin die erste Polyethylen-Fraktion (PE-F1) aufweist

(f) eine Schmelze-Fließ-Rate $MFR_2$ (190°C; 2,16 kg), gemessen gemäß ISO 1133, in dem Bereich von 250 bis 450 g/10 min; und
(g) eine Dichte, gemessen gemäß ISO 1183/ 1872-2 B, von mehr als 0,950 $g/cm^3$.

**2.** Polyethylen (PE-C) nach Anspruch 1, wobei die zweite Polyethylen-Fraktion (PE-F2) eine Dichte in dem Bereich von 0,88 bis 0,935 $g/cm^3$ aufweist.

**3.** Polyethylen (PE-C) nach Anspruch 1 oder 2, wobei das Gewichts-Verhältnis zwischen der ersten Polyethylen-Fraktion (PE-F1) und zweiten Polyethylen-Fraktion (PE-F2) gleich oder unter 1,0, vorzugsweise in dem Bereich von 1/8 bis 8/9, ist.

**4.** Polyethylen (PE-C) nach einem der vorangehenden Ansprüche, wobei die Menge von der ersten Polyethylen-Fraktion (PE-F1) in dem Bereich von 30 bis gleich oder unter 45 Gew.-% ist und die Menge von der zweiten Polyethylen-Fraktion (PE-F2) in dem Bereich von gleich oder unter 55 bis 70 Gew.-%, basierend auf der Gesamt-Menge von dem Polyethylen (PE-C), ist.

**5.** Polyethylen (PE-C) nach einem der vorangehenden Ansprüche, wobei das Polyethylen (PE-C) aufweist

(a) eine Molekular-Gewichts-Verteilung (Mw/Mn) in dem Bereich von 15 bis 45; und/oder

(b) einen Strukturviskositäts-Index SHI (2,7/210), der das Verhältnis von der Viskosität bei einem Komplex-Modul von 2,7 kPa und von 210 kPa von mindestens 15,0 ist;

und/oder

(c) einen Polydispersitäts-Index (PDI) von mindestens 1,5.

6. Polyethylen (PE-C) nach einem der vorangehenden Ansprüche, wobei das Polyethylen (PE-C) ein Fließ-Raten-Verhältnis (FFR; $MFR_{21}/MFR_5$) von mindestens 15 aufweist, wobei die $MFR_5$ die Schmelze-Fließ-Rate $MFR_5$ (190°C; 5 kg), gemessen gemäß

7. Polyethylen (PE-C) nach einem der vorangehenden Ansprüche, wobei die zweite Polyethylen-Fraktion (PE-F2) eine Dichte in dem Bereich von 0,880 bis 0,935 g/cm$^3$ aufweist.

8. Polyethylen (PE-C) nach einem der vorangehenden Ansprüche, wobei das Polyethylen (PE-C) die Ungleichung (II) erfüllt

$$\frac{MFR2(PEF1)}{MFR5(PEC)} \geq 380$$

worin $MFR_2(PF1)$ die Schmelze-Fließ-Rate $MFR_2$ (190°C; 2,16 kg), gemessen gemäß ISO 1133, von der ersten Polyethylen-Fraktion (PE-F1) ist; MFR5(PEC) die Schmelze-Fließ-Rate $MFR_5$ (190°C; 5 kg), gemessen gemäß ISO 1133, von dem Polyethylen (PE-C) ist.

9. Polyethylen (PE-C) nach einem der vorangehenden Ansprüche, wobei das Polyethylen (PE-C) eine nominelle Bruch-Dehnung von mindestens 770 % aufweist.

10. Geomembran, umfassend ein Polyethylen (PE-C) wie in einem der vorangehenden Ansprüche definiert.

11. Geomembran nach Anspruch 10, wobei mindestens eine Schicht der Geomembran umfasst, vorzugsweise um mindestens 90 Gew.-%, basierend auf dem Gesamt-Gewicht der Schicht, umfasst, das Polyethylen (PE-C), wie in einem der vorangehenden Ansprüche 1 bis 9 definiert.

12. Geomembran nach Anspruch 10 oder 11, wobei die Geomembran durch Extrusion hergestellt wird.

13. Verfahren zur Herstellung eines Polyethylens (PE-C), wie in einem der vorangehenden Ansprüche 1 bis 9 definiert, wobei das Verfahren ein sequentielles Polymerisations-Verfahren ist, umfassend mindestens zwei in Reihe verbundene Reaktoren, wobei in dem ersten Reaktor (1. R), vorzugsweise Schleifen-Reaktor (LR), die erste Polyethylen-Fraktion (PE-F1) hergestellt wird und in dem anschließenden zweiten Reaktor (2. R), vorzugsweise in dem Gas-Phasen-Reaktor (GPR), die zweite Polyethylen-Fraktion (PE-F2) in Gegenwart von der ersten Polyethylen-Fraktion (PE-F1) hergestellt wird.

14. Verfahren nach Anspruch 13, wobei die Polymerisation in Gegenwart von einem Ziegler-Natta-Katalysator stattfindet.

**Revendications**

1. Polyéthylène (PE-C) comprenant au moins

(a) une première fraction de polyéthylène (PE-F1), ladite fraction étant un copolymère d'éthylène et de 1-butène,

(b) une deuxième fraction de polyéthylène (PE-F2), ladite fraction étant un copolymère d'éthylène et de 1-hexène, lequel polyéthylène (PE-C)

(c) présente un indice de fluage $MFR_{21}$ (190°C ; 21,6 kg), mesuré conformément à la norme ISO 1133, situé dans la plage allant de 2,0 à 40 g/10 min ; et

(d) présente une masse volumique, mesurée conformément à la norme ISO 1 183/ 1 872-2 B, située dans la plage allant de 0, 930 à 0, 942 g/cm$^3$ ; et

(e) satisfait à l'équation (Ib) :

$$21,0 \leq \frac{MFR2(PEF1)}{MFR21(PEC)} \leq 35,0 \qquad (Ib)$$

dans laquelle MFR2(PF1) est l'indice de fluage $MFR_2$ (190°C ; 2,16 kg), mesuré conformément à la norme ISO 1133, de la première fraction de polyéthylène (PE-F1) ; MFR21(PEC) est l'indice de fluage $MFR_{21}$ (190°C ; 21,6 kg), mesuré conformément à la norme ISO 1133, du polyéthylène (PE-C),

dans lequel en outre ladite première fraction de polyéthylène (PE-F1) présente

(f) un indice de fluage $MFR_2$ (190°C ; 2,16 kg), mesuré conformément à la norme ISO 1133, situé dans la plage allant de 250 à 450 g/10 min ; et

(g) une masse volumique, mesurée conformément à la norme ISO 1 183/ 1 872-2 B, supérieure à 0,950 g/cm$^3$.

2. Polyéthylène (PE-C) selon la revendication 1, dans lequel la deuxième fraction de polyéthylène (PE-F2) présente une masse volumique située dans la plage allant de 0,88 à 0,935 g/cm$^3$.

3. Polyéthylène (PE-C) selon la revendication 1 ou 2, dans lequel le rapport en poids entre la première fraction de polyéthylène (PE-F1) et la deuxième fraction de polyéthylène (PE-F2) est égal ou inférieur à 1,0, de préférence est situé dans la plage allant de 1/8 à 8/9.

4. Polyéthylène (PE-C) selon l'une quelconque des revendications précédentes, dans lequel la quantité de la première fraction de polyéthylène (PE-F1) est située dans la plage allant de 30 à 45 % en poids ou moins et la quantité de la deuxième fraction de polyéthylène (PE-F2) est située dans la plage allant de 55 ou moins à 70 % en poids, par rapport à la quantité totale du polyéthylène (PE-C).

5. Polyéthylène (PE-C) selon l'une quelconque des revendications précédentes, lequel polyéthylène (PE-C) présente

(a) une distribution des masses moléculaires (Mw/Mn) située dans la plage allant de 15 à 45 ; et/ou

(b) un indice de fluidification par cisaillement SHI (2,7/210), qui est le rapport de la viscosité à un module complexe de 2,7 kPa et de 210 kPa, d'au moins 15,0 ; et/ou

(c) un indice de polydispersité (PDI) d'au moins 1,5.

6. Polyéthylène (PE-C) selon l'une quelconque des revendications précédentes, lequel polyéthylène (PE-C) présente un rapport d'indice de fluage (FFR ; $MFR_{21}/MFR_5$) d'au moins 15, où le $MFR_5$ est l'indice de fluage (190 °C ; 5 kg) mesuré conformément à la norme ISO 1133.

7. Polyéthylène (PE-C) selon l'une quelconque des revendications précédentes, dans lequel la deuxième fraction de polyéthylène (PE-F2) présente une masse volumique située dans la plage allant de 0,880 à 0,935 g/cm$^3$.

8. Polyéthylène (PE-C) selon l'une quelconque des revendications précédentes, lequel polyéthylène (PE-C) satisfait à l'équation (II)

$$\frac{MFR2(PEF1)}{PFR5(PEC)} \geq 380$$

dans laquelle MFR2(PF1) est l'indice de fluage $MFR_2$ (190°C ; 2,16 kg), mesuré conformément à la norme ISO 1133, de la première fraction de polyéthylène (PE-F1) ; MFR5(PEC) est l'indice de fluage $MFR_5$ (190°C ; 5 kg), mesuré conformément à la norme ISO 1133, du polyéthylène (PE-C).

9. Polyéthylène (PE-C) selon l'une quelconque des revendications précédentes, lequel polyéthylène (PE-C) présente une déformation nominale à la rupture d'au moins 770 %.

10. Géomembrane comprenant un polyéthylène (PE-C) tel que défini dans l'une quelconque des revendications précédentes.

**11.** Géomembrane selon la revendication 10, dans laquelle au moins une couche de la géomembrane comprend, de préférence comprend à raison d'au moins 90 % en poids par rapport au poids total de ladite couche, le polyéthylène (PE-C) tel que défini dans l'une quelconque des revendications 1 à 9.

**12.** Géomembrane selon la revendication 10 ou 11, laquelle géomembrane est produite par extrusion.

**13.** Procédé pour produire un polyéthylène (PE-C) tel que défini dans l'une quelconque des revendications 1 à 9, lequel procédé est un procédé de polymérisation séquentiel comprenant au moins deux réacteurs connectés en série, et dans lequel, dans le premier réacteur (1$^{er}$R), de préférence un réacteur à boucle (LR), la première fraction de polyéthylène (PE-F1) est produite et, dans le deuxième réacteur subséquent (2$^{ème}$R), de préférence un réacteur en phase gazeuse (GPR), la deuxième fraction de polyéthylène (PE-F2) est produite en présence de la première fraction de polyéthylène (PE-F1).

**14.** Procédé selon la revendication 13, dans lequel la polymérisation se déroule en présence d'un catalyseur de Ziegler-Natta.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006067180 A
- US 5736237 A
- EP 517868 A
- WO 9535323 A
- WO 0155230 A
- WO 2004000933 A
- EP 810235 A
- WO 9951646 A
- EP 688794 A

### Non-patent literature cited in the description

- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253
- **HEINO, EX. ; LEHTINEN, A. ; TANNER I ; SEPPALA, J. ; NESTE OY.** Rheological characterization of polyethylene fractions. *Theor. Appl. RheoL, Proc. Int. Congr. Rheol,* 1992, vol. 1, 360-362
- **HEINO, E.L.** The influence of molecular structure on some rheoiogicai properties of polyethylene. *Borealis Polymers Oy,* 1995
- Definition of term relating to the non-ultimate mechanical properties of polymers. *Pure & Appl. Chem.,* 1998, vol. 70 (3), 701-754